# EUROPÄISCHE PATENTSCHRIFT

(11) **EP 2 209 690 B1**
(45) Veröffentlichungstag und Bekanntmachung des Hinweises auf die Patenterteilung: **20.06.2012**
(21) Anmeldenummer: 08799944.7
(22) Anmeldetag: 02.10.2008
(51) Int. Cl.: B61C 1/00

(54) **ANTRIEBSFAHRZEUG**
DRIVING VEHICLE
VÉHICULE DE TRACTION

(30) Priorität: 04.10.2007 AT 15742007; 27.11.2007 AT 19262007
(43) Veröffentlichungstag der Anmeldung: 28.07.2010
(73) Patentinhaber: Unseld, Hans G., 1080 Wien (AT)
(72) Erfinder: Unseld, Hans G., 1080 Wien (AT)
(74) Vertreter: Krause, Peter
(86) Internationale Anmeldenummer: PCT/AT2008/000355
(87) Internationale Veröffentlichungsnummer: WO 2009/043074

(56) Entgegenhaltungen:
- EP-A- 0 377 499
- WO-A-2005/039952
- DE-A1- 2 542 682
- DE-U1- 29 611 900
- US-A- 1 969 919

## Beschreibung

Die Erfindung betrifft ein schienengebundenes, insbesondere fahrerloses, selbstfahrendes Antriebsfahrzeug für mehrere Waggons, vorzugsweise für einen regionalen Güterverkehr, wobei das Antriebsfahrzeug mit einem am tiefsten zulässigen Niveau vorgesehenen Antrieb in Niederflurtechnik ausgeführt ist.

Aus der DE 296 11 900 U1 und der EP 0 377 499 ist jeweils ein Antriebsfahrzeug mit einem Antrieb, der am tiefsten zulässigen Niveau in Niederflurtechnik ausgeführt ist, bekannt.

Auch für den Transport von Gütern mit der Eisenbahn sind Lastkraftwagen, nachstehend LKW genannt, unumgänglich. Die Waren müssen nämlich zuerst von Absendern auf den Eisenbahnwaggon gebracht und am Zielbahnhof vom Waggon zum Empfänger transportiert werden. Dieser Transport von und zur Schiene kann nur auf der Straße erfolgen. Durch diese Schnittstellenproblematik Straße-Eisenbahn ist aber der Gütertransport mit der Eisenbahn gegenüber dem Straßentransport stark benachteiligt. Wobei das eigentliche Problem das Umladen der Güter vom LKW auf den Waggon und umgekehrt ist. Das eingesetzte Umladeverfahren ist deshalb für das erreichbare Transportvolumen und die entstehenden Kosten hauptverantwortlich.

Je nach geplantem Umladevolumen und den örtlichen Gegebenheiten wurden für das effiziente Umladen individuelle Lösungen entwickelt und umgesetzt bzw. sind in Umsetzung, wie z. B. in der WO 2006/119955 A1 beschrieben.

Verfügen Absender und/oder Empfänger auf Grund der Betriebsgröße über eigene Gleisanschlüsse oder liegen an einer Nebenbahn, fällt zwar eine Schnittstelle weg, aber es ergibt sich, abhängig vom Transportvolumen, ein anderes schwerwiegendes Problem.

Üblicherweise bestehen die Güterzüge mit denen die Waren in Containern oder mitsamt dem LKW transportiert werden, aus einer Lokomotive und einer Vielzahl von Waggons. Davon bekommt der Kunde mit dem eigenen Gleisanschluss bzw. über die Nebenbahn je nach Transportvolumen einen oder mehrere Waggons zugestellt. Zusätzlich werden nur leere Waggons bereitgestellt, wenn Waren vom Betrieb abzutransportieren sind. Das ist beispielsweise bei großen Betrieben der Fall, die Vormaterial oder Halbfertigprodukte angeliefert bekommen und die daraus hergestellten Endprodukte mit der Bahn an ihre Kunden senden. Das heißt, die für den Kunden bestimmten vollen oder leeren Waggons müssen vom Güterzug ab- bzw. angekuppelt werden. Dazu muss der Güterzug im Bahnhof, in dem das Anschlussgleis abzweigt, anhalten. Befinden sich die abzukuppelnden Waggons am Zugende ist das Abkuppeln kaum ein Problem. Gibt es zwischen Start- und Zielbahnhof nur einen Kunden für den Waggons abzukuppeln sind, kann das bei der Zugzusammenstellung der Waggons am Startbahnhof problemlos berücksichtigt werden. Müssen Waggons abgekuppelt und sollen andere an den selben Zug angehängt werden, wird eine gewisse Rangierarbeit erforderlich, weil zuerst die abgekuppelten Waggons auf ein anderes Gleis geschoben werden müssen, um dann die neuen Waggons ans Zugende hängen zu können. Liegen aber mehrere Kunden auf einer Strecke, die nicht nur Waggons bekommen sondern auch abschicken, ist jeweils eine zeitaufwändige Rangierarbeit unumgänglich.

Je nach Ausstattung des Bahnhofs mit Rangiergeleisen und Rangierlokomotiven ist eine Kapazitätsobergrenze schnell erreicht und eine Erhöhung des Umschlagvolumens nur mit enormen Investitionen in die Infrastruktur möglich. Zusätzlich hat die Bahn mit öfteren langen Aufenthalten des gesamten Güterzuges wenig Freude, weil sich die Transportzeit der übrigen Güter entsprechend verlängert.

Es wurde deshalb ein schienengebundenes Transportfahrzeug entwickelt, hergestellt und erprobt. Dieses Transportfahrzeug wird Cargo-mover genannt und soll ähnlich einem LKW auf Schienen die Waren beim Kunden abholen und zum Bestimmungsbahnhof transportieren. Dabei können auch weiter entfernte Zielbahnhöfe angefahren werden, sodass auch längere Strecken auf den Schienen zurückzulegen sind. Der Cargo-mover hat daher neben einer eigenen Antriebseinheit auch alle vorgeschriebenen Sicherheitseinrichtungen für das Befahren des Schienennetzes der Bahn und eine Fahrerkabine. Betrieben kann diese Fahrzeug nur von ausgebildeten Lokführern werden. Deshalb ist der Cargo-mover sowohl in der Anschaffung als auch im Betrieb sehr teuer.

Zielsetzung beim Cargo-mover war es, die Waren ohne Rangierarbeiten im Bahnhof und unabhängig von Güterzügen zum Bestimmungsbahnhof zu bringen. Sind nur einzelne Cargo-mover im Schienennetz unterwegs ist das sicher möglich. Der große Nachteil dieses Konzeptes ist aber, dass bei vielen einzelnen derartigen Fahrzeugen das Schienennetz bald überfordert wird. Auch zwischen zwei Cargo-movern muss derselbe Sicherheitsabstand am Gleis eingehalten werden, wie bei Zügen. Das hat zur Folge, dass pro Zeiteinheit nur eine bestimmte Anzahl von Cargo-movern neben den regulären Zügen fahren kann. Sollen mehr Cargo - mover notwendig sein, müssten diese wieder in zusammenhängenden Verbänden, also wie Güterzüge, fahren. Damit wäre aber der Vorteil des Konzeptes aufgehoben, weil dann erst wieder Rangierarbeit in den Bahnhöfen notwendig wird und man gleich normale Güterwaggons anstatt der teuren Cargo-mover einsetzen könnte.

Ein anderer Lösungsvorschlag wird in der WO 2007/077060 A1 beschrieben. Es handelt sich dabei um ein Schienenfahrzeug mit eigenem Antrieb ähnlich dem Cargo-mover. Der Antrieb ist ein Elektromotor der über entsprechende Speicher gespeist wird. Die Antriebsleistung ist so gewählt, dass das Fahrzeug kurze Strecken mit eigenem Antrieb fahren kann, beispielsweise zum Rangieren oder kurze Strecken vom Bahnhof zum Kunden und retour. Für die Fernfahrten werden die Fahrzeuge wie Güterwaggons zu Zügen zusammengestellt und von einer Lok gezogen. Dann ist der Fahrzeugantrieb abgeschaltet. Außerdem ist das Fahrzeug fernsteuerbar, so dass beim Rangieren mehrerer Fahrzeuge nicht entsprechend viele Fahrzeugführer gebraucht werden.

Der große Nachteil dieses Konzeptes ist, dass beim Rangieren zwar keine Rangierlok mehr gebraucht wird, weil die Fahrzeuge einen eigenen Antrieb haben, aber entsprechende Rangiergeleise sind trotzdem notwendig. Insbesondere dann, wenn nicht nur Fahrzeuge abgekuppelt werden, sondern auch neue vom selben Zug mitgenommen werden sollen.

Ein weiterer Lösungsvorschlag wird in WO 2004/028881 A1 beschrieben. Es wird ein Sensorsystem und Verfahren zur Fahrwegüberwachung einer mobilen, schienengebundenen Einheit dargestellt. Dieses Schienenfahrzeug soll fahrerlos und ohne Fernsteuerung eine Schienenstrecke befahren können. Zum Warentransport auf einem Anschlussgleis eingesetzt, könnte das Fahrzeug den Fahrzeugführer und wegen des eigenen Antriebs die Rangierlok ersparen. Die Voraussetzung ist, dass trotzdem entsprechende Rangiergleise vorhanden sein müssen, sonst kann das Anschlussgleis oder die Nebenbahn nicht bedient werden.

Die Aufgabe der Erfindung ist es, ein Antriebsfahrzeug der eingangs genannten Art zu schaffen, das einerseits die oben erwähnten Nachteile vermeidet und das anderseits mit seinem Einsatz zu einer hohen Wirtschaftlichkeit im regionalen Güterverkehr führt.

Die Aufgabe wird durch die Erfindung gelöst.

Die Erfindung ist dadurch gekennzeichnet, dass eine mit Fahrzeugen, insbesondere Lastkraftwagen, gegebenenfalls mit Sattelauflegern, befahrbare Brücke vorgesehen ist, wobei die Brücke mit den Ladeflächen der Waggons, insbesondere der Niederflurwaggons, eine die komplette Zuglänge überfahrbare Fahrbahn bilden kann. Mit der Erfindung ist es erstmals möglich, Güter von Waggons eines Eisenbahnzuges über den Gleisanschluss oder eine Nebenbahn dem Empfänger zuzustellen bzw. Waren von dort auf den Güterzug zu bringen ohne den Zug durch zeitaufwändige Rangierarbeiten zu langen Stillstandzeiten im Bahnhof zu zwingen. Beim Kunden fahren LKW oder andere innerbetriebliche Fahrzeuge, entweder leer oder mit Waren des Kunden beladen, auf das erfindungsgemäße Fahrzeug und können noch vor Ankunft des Güterzuges in die Umladezone des Bahnhofes gebracht werden. Nachdem der Güterzug auf dem Nebengleis ebenfalls die Umladezone erreicht hat und zum Stillstand gekommen ist, werden die Güter, wie beispielsweise Container von geeigneten Umladevorrichtungen, wie etwa in der WO 2006/119955 A1 beschrieben, in kürzester Zeit vom Eisenbahnwaggon auf die LKW oder andere innerbetriebliche Fahrzeuge am erfindungsgemäße Fahrzeug umgeladen und die Güter, die abzutransportieren sind auf die Waggons transferiert. Da kein Rangieren mehr notwendig ist und das Umladen sehr rasch und insbesondere bei mehreren Containern gleichzeitig erfolgt, kann der Güterzug in kürzester Zeit seine Fahrt fortsetzen. Ein weiterer enormer Vorteil der Erfindung ist, dass die Umladekapazität, ohne kostenintensive Investitionen in zusätzliche Rangiergleise und Rangierloks, fast beliebig steigerbar ist.

Gemäß einer Ausgestaltung der Erfindung sind die Waggons ein- oder beidseitig an das Antriebsfahrzeug angekuppelt. Dadurch wird es möglich richtungsunabhängig Waggons an- und abzukuppeln, das heißt ohne dass das erfindungsgemäße Fahrzeug durch zeitaufwändiges Rangieren vor- oder hinter die zu transportierenden Waggons gefahren werden muss. Darüber hinaus kann auch eine eingleisige Strecke optimal genützt werden.

Nach einem besonderen Merkmal der Erfindung erstreckt sich die Brücke über das komplette Fahrzeug. Eine einfache Brückenkonstruktion die sich über das Fahrzeug erstreckt, erhöht die Wirtschaftlichkeit des erfindungsgemäßen Fahrzeuges.

Gemäß einer weiteren Ausgestaltung der Erfindung ist der Antrieb eine Verbrennungskraftmaschine, insbesondere ein Dieselmotor ist, der im Fahrgestell am tiefst zulässigen Niveau vorgesehen. Das hat den enormen Vorteil, dass das erfindungsgemäße Fahrzeug nicht von einer Energiezufuhr von außen, wie beispielsweise einer elektrischen Oberleitung abhängig ist. Die meisten Anschlussgeleise zu Betrieben oder Nebenbahnen sind aus Kostengründen nicht elektrifiziert. Das Fahrzeug kann daher auf praktisch jedem Gleisanschnitt eingesetzt werden.

Nach einer alternativen Ausgestaltung der Erfindung ist der Antrieb ein Elektroantrieb, wobei als Energiequelle Batterien oder Akkumulatoren oder eine externe Energiequelle, wie beispielsweise einer Oberleitung, vorgesehen sind. Das ermöglicht das Betreiben des erfindungsgemäße Fahrzeuges bzw. die Güterzustellung bzw. die Abholung ohne Treibhaus-Gasemissionen, was insbesondere bei Strecken durch Wohn- oder Naturschutzgebiete ein wichtiger Vorteil ist.

Gemäß einer besonderen Weiterbildung der Erfindung ist der Antrieb ein elektrischer Einzelradantrieb. Da der Platz zwischen Schienenoberkante und Ladeebene auf Grund der Niederflurausführung sehr beschränkt ist, können entsprechend leistungsstarke Verbrennungskraftmaschinen zum Fahrzeugantrieb sehr schwer untergebracht werden. Wird jedoch der Antrieb auf die einzelnen Räder aufgeteilt, können mehrere kleinere Elektromotoren eingesetzt werden, so dass in Summe eine entsprechende Antriebsleistung zur Verfügung steht. Die Motoren werden durch eine geeignete Software gesteuert und geregelt.

Nach einer weiteren besonderen Ausgestaltung der Erfindung ist der Antrieb ein Hybridantrieb. Das hat den Vorteil, dass der derzeit effizienteste Antrieb eingesetzt werden kann. Üblicherweise handelt es dabei um einen Elektromotor, der über einen elektrischen Speicher und einen von einem Dieselmotor betriebenen Generator gespeist wird. Da die Bremsenergie zurückgewonnen wird und der Dieselmotor im optimalen Bereich arbeitet, erreicht der Hybridantrieb den größten Wirkungsgrad bei der geringsten CO² - Emission.

Gemäß einem besonderen Merkmal der Erfindung sind eine Energieversorgung und/oder Steuerungseinheiten und/oder Bremsen und/oder Beleuchtung im bzw. am Antriebsfahrzeug vorgesehen. In vorteilhafterweise wird mit dieser Struktur ein schienenfähiges Fahrzeug geschaffen.

Nach einer besonderen Ausgestaltung der Erfindung ist am Anfang und/oder am Ende des Zuges eine Sensorik vorgesehen, wobei die Übertragung dieser Messwerte bzw. Impulse an das Antriebsfahrzeug, vorzugsweise mittels Fernübertragung, erfolgt. Das hat den Vorteil, dass das Fahrzeug auch fahrerlos betrieben werden kann. Die Sensorik überwacht den Schienebereich und sendet seine Daten mittels kabelloser Fernübertragung an die Datenverarbeitung im Fahrzeug. Daher müssen beim An- und Abkuppeln keine elektrischen Leitungen zusammengesteckt werden. Diese Steckverbindungen sind eine ständige Quelle möglicher Fehler, wie Beschädigungen oder schlechte Kontaktierung, die dadurch ausgeschaltet wird.

Nach einem weiteren besonderen Merkmal der Erfindung ist der Antrieb, beispielsweise über eine hydraulische Einrichtung, die vorzugsweise im Fahrgestell vorgesehen ist, in vertikaler Richtung heb- und senkbar. Nachdem - wie bereits weiter oben erwähnt - vertikaler Platzmangel gegeben ist, wäre dies eine Möglichkeit, bei stehendem Zug, den Antrieb abzusenken, um die Steigung zu verringern.

Nach einer besonderen Ausgestaltung der Erfindung ist die Brücke beispielsweise über eine hydraulische Einrichtung in vertikaler Richtung heb- und senkbar. Wie bereits oben aufgezeigt, könnte dadurch die Steigung von der Fahrbahn über die Brücke minimiert werden.

Gemäß einer Weiterbildung der Erfindung ist die Brücke mehrteilig ausgebildet und entsprechende Teile der Brücke sind in vertikaler Richtung heb- und senkbar. Auch diese Ausgestaltung dient zur Minimierung der Steigung.

Nach einer weiteren Ausgestaltung der Erfindung ist mindestens an einem Ende des Zuges eine Auffahrrampe vorgesehen. Das bringt den Vorteil dass LKW, Sattelaufleger oder sonstige innerbetriebliche Transportfahrzeuge problemlos auf das erfindungsgemäße Fahrzeug als auch auf die angekuppelten Waggons -auf- und wieder herunterfahren können.

Die Erfindung wird an Hand von Ausführungsbeispielen, die in der Zeichnung dargestellt sind, näher erläutert.

Es zeigen:
Fig. 1 in schaubildlicher Darstellung ein Antriebsfahrzeug für das Zustellgleis,
Fig. 2 eine Seitenansicht des Antriebsfahrzeuges und
Fig. 3 ein Antriebsfahrzeug mit Brückenwagen.

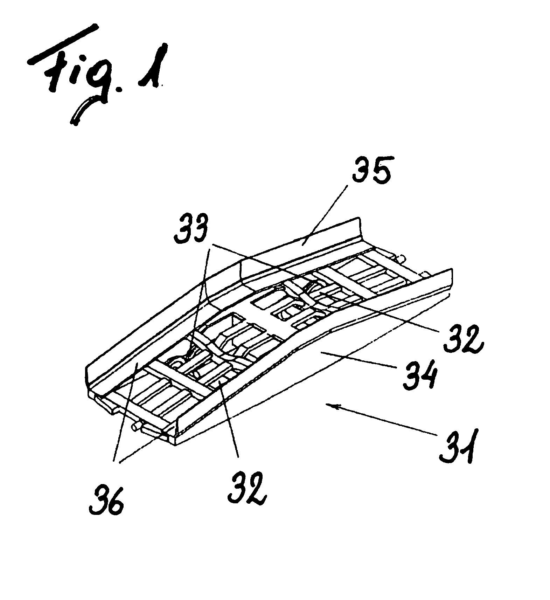

Gemäß der Fig. 1 ist ein fahrerloses, selbstfahrendes, schienengebundenes Antriebsfahrzeug 31 für mehrere - nicht dargestellte - Waggons gezeigt, das auf einem Anschlussgleis 5 vorzugsweise für einen regionalen Güterverkehr eingesetzt werden kann.

Das Antriebsfahrzeug 31 ist in Niederflurtechnik ausgeführt, wobei auf die speziellen Antriebsfragen noch später eingegangen wird. Das Antriebsfahrzeug 31 weist zwei Drehgestelle 32 mit Rädern 33 auf, die in einem Fahrgestellrahmen 34 angeordnet sind.

Der Fahrgestellrahmen 34 weist eine befahrbare Brücke 35 als Ladefläche auf, die sich über die Drehgestelle 32 erstreckt. Diese Brücke 35 bildet mit den Ladeflächen der angekuppelten Niederflurwaggons eine die komplette Zuglänge überfahrbare Fahrbahn 36. Natürlich können die Waggons ein- oder beidseitig an das Antriebsfahrzeug 31 angekuppelt sein. Die Brücke 35 mit ihrer Fahrbahn 36 ist mit Fahrzeugen, insbesondere Lastkraftwagen, gegebenenfalls mit Sattelauflegern befahrbar.

Um ein den technischen Auflagen entsprechendes Antriebsfahrzeug 31 zu schaffen, sind eine Energieversorgung, die Steuerungseinheiten, die Bremsen und die Beleuchtung im bzw. am Antriebsfahrzeug 31 vorgesehen. Am Anfang und am Ende des Zuges ist eine Sensorik vorgesehen, wobei die Übertragung dieser Messwerte bzw. Impulse an das Antriebsfahrzeug 31, vorzugsweise mittels Fernübertragung, erfolgt.

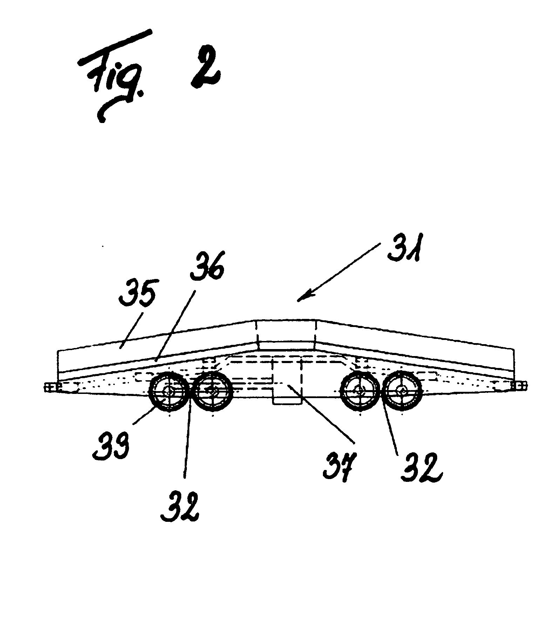

Gemäß der Fig. 2 weist das Antriebsfahrzeug 31 seine Räder 33 auf, die mittels Drehgestellen 32 im Fahrgestellrahmen 34 angeordnet sind. Die Brücke 35 mit ihrer Fahrbahn 36 ist über diesen Drehgestellen 32 vorgesehen.

Ein Antrieb 37 für das Antriebsfahrzeug 31 ist am tiefsten zulässigen Niveau vorgesehenen. Der Antrieb 37 kann eine Verbrennungskraftmaschine, insbesondere ein Dieselmotor oder ein Elektroantrieb sein. Eine weitere Alternative könnte auch ein Hybridantrieb sein. Bei Verwendung eines Elektroantriebes können als Energiequelle Batterien oder Akkumulatoren oder auch alternativ eine externe Energiequelle, wie beispielsweise eine Oberleitung, vorgesehen sein.

Wichtig bei allen Arten des Antriebes 37 ist, dass er im Fahrgestellrahmen 34 am tiefst zulässigen Niveau vorgesehen ist.

Natürlich könnte auch als Antrieb 37 ein elektrischer Einzelradantrieb vorgesehen werden. Derartige Antriebsvarianten haben den Vorteil, dass gegebenenfalls weniger Probleme in Bauhöhenfragen aufgeworfen werden.

Gerade die Problematik der Bauhöhe könnte dadurch gelöst werden, wenn der Antrieb 37, beispielsweise über eine hydraulische Einrichtung, die vorzugsweise im Fahrgestellrahmen 34 vorgesehen ist, in vertikaler Richtung heb- und senkbar ist. Entsprechend einer derartigen Ausführung wäre es folgerichtig, dass auch die Brücke 35, beispielsweise über eine hydraulische Einrichtung in vertikaler Richtung heb- und senkbar ist. Entsprechend dem Vorbild der "Tower Bridge" könnte die Brücke 35 auch mehrteilig ausgebildet sein und entsprechende Teile der Brücke 35 wären in vertikaler Richtung heb- und senkbar.

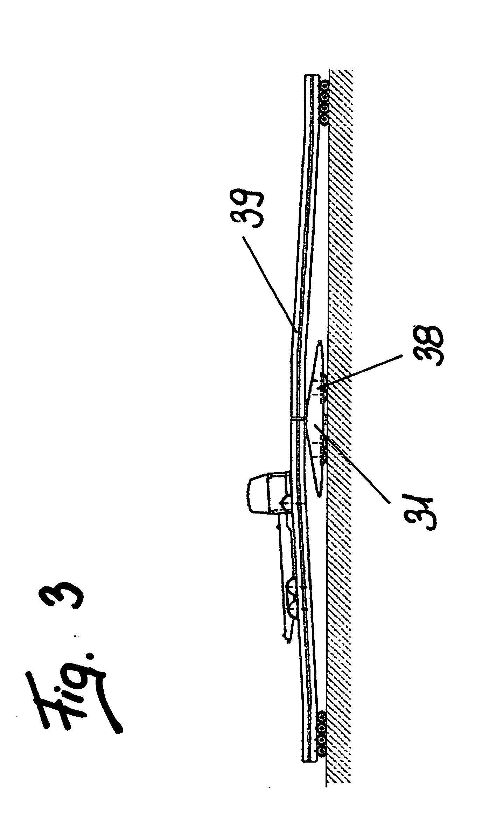

Eine alternative Ausführung eines Antriebsfahrzeuges 31 ist in der Fig. 3 aufgezeigt.

Das Antriebsfahrzeug 31 mit seiner Fahrzeuggarnitur am Anschlussgleis 5 kann für die Aufnahme von Straßenfahrzeugen ausgebildet sein und den zentralen Teil eines Zustellzuges bilden. Dieser Zug besteht aus den folgenden insgesamt fünf zentralen Komponenten:
a) einem Antriebsteil mit einem dieselhydraulischen Antriebsstrang und einem Steuerteil zur fernwirkenden Steuerung des gesamten Zuges
b) zwei Brückenwagen
c) einem oder mehreren Niederflurtragwagen, z.B. Saadkms,
d) zwei Zugende-Markierungen mit Auffahrtrampen, Beleuchtung und Sensoren,
e) einer Fahrzeugsteuerung zur Fernsteuerung, bzw. On-board Steuerung des Zugs.

Straßenfahrzeuge können beispielsweise sein: LKW-Chassis, LKW-Anhänger Chassis, Sattelauflieger-Chassis, kurvengängige Schwerlastanhänger oder auch Containertransportfahrzeuge.

Für jede dieser Komponenten sind noch Entwicklungen zu erwarten, die durch die Anzahl und Komplexität der Einsatzfälle, die Anzahl der in Betrieb stehenden Fahrzeuge und die Verschiedenartigkeit der Anwenderwünsche bestimmt wird. Zu den Innovationen könnten zählen:
- ein Antriebsfahrzeug 31 mit einem besonders einfach konstruierten Fahrzeugrahmen zur Aufnahme aller Aggregate. So wird ein Antriebsfahrzeug 31 mit Jacobs Drehgestellen 38 und einem Brückenwagen 39 als integriertes und kompaktes Antriebsfahrzeug 31 und einem angetriebenen und einem nicht angetriebenen Drehgestell vorgeschlagen
- ein zeitgemäßes Antriebspaket, samt den Potenzialen von weiteren Verbesserungen, wie beispielsweise einem ECOpack,
- eine drahtlose Fahrzeugsteuerung, beispielsweise über ein Mitnahme-Panel zur Mitnahme in die Kabine eines beladenen Straßenfahrzeugs,
- ein neuartiger Brückenwagen in geknickter Bauform, als eine Modifikation eines Niederflurwagens,
- für einen Fahrbetrieb vorgeschriebene Zugende-Vorrichtungen.

Wie bereits eingangs dargelegt, ist es mit einem Zug, dessen Antriebsfahrzeug 31 nach obigen Ausführungen konzipiert ist, möglich, Fahrzeuge oder Güter von Waggons eines Eisenbahnzuges über das Anschlussgleis 5 zuzustellen bzw. Waren von dort auf den Güterzug zu bringen, ohne den Zug durch zeitaufwändige Rangierarbeiten zu langen Stillstandzeiten im Bahnhof zu zwingen.

Um den LKW's eine Zufahrt auf den Zug zu ermöglichen, ist mindestens an einem Ende des Zuges eine Auffahrrampe vorgesehen.

Für die Nutzung des Antriebsfahrzeuges werden beispielsweise zwei Varianten vorgeschlagen:
Erste Variante: Nutzung eines Zwei-Wege-Fahrzeugs für zwei Funktionen:
   a) Mithilfe beim Laden, wie beispielsweise Abholung von bereitgestellten Anhänger Chassis, Bilden einer, ähnlich wie bei Dolly-Verkehren bekannten, kurvengängigen Anhängergruppe und Laden der Fahrzeuge auf die Fahrzeuggarnitur.
   b) Ziehen der Wagengruppe auf der Schiene bis zum Bestimmungsbahnhof.

Zweite Variante: Nutzung eines Antriebsfahrzeuges, welches nur auf einer nicht-öffentlichen Eisenbahninfrastruktur betrieben werden darf. Diese Fahrzeuggarnitur besteht aus einem Antriebsfahrzeug mit Fernsteuerung, einem oder zwei Brückenwagen und einer Anzahl von Standard-Niederflurwagen.

## Patentansprüche

1. Schienengebundenes, insbesondere fahrerloses, selbstfahrendes Antriebsfahrzeug (31) für mehrere Waggons, vorzugsweise für einen regionalen Güterverkehr, wobei das Antriebsfahrzeug (31) mit einem am tiefsten zulässigen Niveau vorgesehenen Antrieb (37) in Niederflurtechnik ausgeführt ist, **dadurch gekennzeichnet, dass** eine mit Fahrzeugen, insbesondere Lastkraftwagen, gegebenenfalls mit Sattelauflegern, befahrbare Brücke (35) vorgesehen ist, wobei die Brücke (35) mit den Ladeflächen der Waggons, insbesondere der Niederflurwaggons, eine die komplette Zuglänge überfahrbare Fahrbahn (36) bilden kann.

2. Antriebsfahrzeug nach Anspruch 1, **dadurch gekennzeichnet, dass** die Waggons ein- oder beidseitig an das Antriebsfahrzeug (31) angekuppelt sind.

3. Antriebsfahrzeug nach einem der Ansprüche 1 oder 2, **dadurch gekennzeichnet, dass** die Brücke (35) sich über das komplette Fahrzeug erstreckt.

4. Antriebsfahrzeug nach einem der vorhergehenden Ansprüche 1 bis 3, **dadurch gekennzeichnet, dass** es einen als, vorzugsweise geknickten, Brückenwagen (39) ausgebildeten Fahrzeugrahmen aufweist, der zur Aufnahme aller Aggregate und der für den Fahrbetrieb vorgeschriebenen Einrichtungen dient und der Brückenwagen mit einem Antriebswagen versehen ist, der mindestens ein antreibbares Drehgestell, vorzugsweise ein Jacobs-Drehgestell (38), aufweist.

5. Antriebsfahrzeug nach einem der vorhergehenden Ansprüche 1 bis 4, **dadurch gekennzeichnet, dass** der Antrieb (37) eine Verbrennungskraftmaschine, insbesondere ein Dieselmotor ist, der im Fahrgestellrahmen (34) am tiefst zulässigen Niveau vorgesehen ist.

6. Antriebsfahrzeug nach einem der vorhergehenden Ansprüche 1 bis 4, **dadurch gekennzeichnet, dass** der Antrieb (37) ein Elektroantrieb ist, wobei als Energiequelle Batterien oder Akkumulatoren oder eine externe Energiequelle, wie beispielsweise einer Oberleitung, vorgesehen ist.

7. Antriebsfahrzeug nach Anspruch 6, **dadurch gekennzeichnet, dass** der Antrieb (37) ein elektrischer Einzelradantrieb ist.

8. Antriebsfahrzeug nach einem der vorhergehenden Ansprüche 1 bis 4, **dadurch gekennzeichnet, dass** der Antrieb (37) ein Hybridantrieb ist.

9. Antriebsfahrzeug nach einem der vorhergehenden Ansprüche 1 bis 8, **dadurch gekennzeichnet, dass** eine Energieversorgung und/oder Steuerungseinheiten und/oder Bremsen und/oder Beleuchtung im bzw. am Antriebsfahrzeug (31) vorgesehen sind.

10. Antriebsfahrzeug nach einem der vorhergehenden Ansprüche 1 bis 9, **dadurch gekennzeichnet, dass** am Anfang und/oder am Ende des Zuges eine Sensorik vorgesehen ist, wobei die Übertragung dieser Messwerte bzw. Impulse an das Antriebsfahrzeug (31), vorzugsweise mittels Fernübertragung, erfolgt.

11. Antriebsfahrzeug nach einem der vorhergehenden Ansprüche 1 bis 10, **dadurch gekennzeichnet, dass** der Antrieb (37), beispielsweise über eine hydraulische Einrichtung, die vorzugsweise im Fahrgestellrahmen (34) vorgesehen ist, in vertikaler Richtung heb- und senkbar ist.

12. Antriebsfahrzeug nach einem der vorhergehenden Ansprüche 1 bis 11, **dadurch gekennzeichnet, dass** die Brücke (35) beispielsweise über eine hydraulische Einrichtung in vertikaler Richtung heb- und senkbar ist.

13. Antriebsfahrzeug nach einem der vorhergehenden Ansprüche 1 bis 12, **dadurch gekennzeichnet, dass** die Brücke (35) mehrteilig ausgebildet ist und entsprechende Teile der Brücke (35) in vertikaler Richtung heb- und senkbar sind.

14. Antriebsfahrzeug nach einem der vorhergehenden Ansprüche 1 bis 13, **dadurch gekennzeichnet, dass** mindestens an einem Ende des Zuges eine Auffahrrampe vorgesehen ist.

## Claims

1. Rail-mounted, particularly driverless, automotive driving vehicle (31) for several freight cars, preferably for regional freight traffic, wherein the driving vehicle (31) is designed in low-platform technology with a drive unit (37) that is disposed on the lowest admissible level, **characterised in that** a bridge (35) on which vehicles, especially trucks, optionally equipped with semitrailers, can drive is arranged, wherein the bridge (35), along with the loading areas of the freight cars, especially the low-platform freight cars, can form a running track (36) which can drive along the entire length of the train.

2. Driving vehicle in accordance with Claim 1, **characterised in that** the freight cars are coupled to the driving vehicle (31) on one or both sides.

3. Driving vehicle in accordance with one of Claims 1 or 2, **characterised in that** the bridge (35) reaches across the complete vehicle.

4. Driving vehicle in accordance with one of the preceding Claims 1 to 3, **characterised in that** it comprises a vehicle chassis designed as a preferably buckled bridge wagon (39), which serves for acceptance of all aggregates and installations prescribed for driving operation and the bridge wagon is provided with a driving wagon comprising at least one drivable bogie, preferably a Jacobs bogie (38).

5. Driving vehicle in accordance with one of the preceding Claims 1 to 4, **characterised in that** the drive unit (37) is an internal combustion engine, in particular a diesel engine, provided in the chassis frame (34) on the lowest admissible level.

6. Driving vehicle in accordance with one of the preceding Claims 1 to 4, **characterised in that** the drive unit (37) is an electric drive, wherein batteries or accumulators or an external energy source, such as for example an overhead line, is provided.

7. Driving vehicle in accordance with Claim 6, **characterised in that** the drive unit (37) is an electric single-wheel drive.

8. Driving vehicle in accordance with one of the preceding Claims 1 to 4, **characterised in that** the drive unit (37) is a hybrid drive.

9. Driving vehicle in accordance with one of the preceding Claims 1 to 8, **characterised in that** an energy supply and/or control units and/or brakes and/or lighting are provided in or on the driving vehicle (31).

10. Driving vehicle in accordance with one of the preceding Claims 1 to 9, **characterised in that** sensor technology is provided at the beginning and/or at the end of the train, wherein these measured values or pulses are transmitted to the driving vehicle (31), preferably by remote transmission.

11. Driving vehicle in accordance with one of the preceding Claims 1 to 10, **characterised in that** the drive unit (37) can be lifted and lowered in a vertical direction, for example by a hydraulic device which is provided preferably in the chassis frame (34).

12. Driving vehicle in accordance with one of the preceding Claims 1 to 11, **characterised in that** the bridge (35) can be lifted and lowered in a vertical direction, for example through a hydraulic device.

13. Driving vehicle in accordance with one of the preceding Claims 1 to 12, **characterised in that** the bridge (35) is designed of multiple parts and relevant parts of the bridge (35) can be lifted and lowered in a vertical direction.

14. Driving vehicle in accordance with one of the preceding Claims 1 to 13, **characterised in that** an access ramp is provided at least at one end of the train.

## Revendications

1. Véhicule automoteur sur rail, notamment autoguidé (31), pour plusieurs wagons, de préférence pour un transport de marchandises régional, lequel véhicule moteur (31) est exécuté selon la technique surbaissée avec une unité motrice (37) prévue au niveau le plus bas autorisé, et **caractérisé par le fait qu'**une passerelle (35) praticable par des véhicules, notamment des camions, le cas échéant des semi-remorques, est prévue et que ladite passerelle (35) peut constituer avec les plateformes de chargement des wagons, notamment des wagons surbaissés, une voie de roulement praticable sur toute la longueur du train.

2. Véhicule moteur, selon la revendication 1, **caractérisé par le fait que** les wagons sont attelés d'un ou des deux côtés du véhicule moteur (31).

3. Véhicule moteur, selon l'une des précédentes revendications 1 et 2, **caractérisé par le fait que** la passerelle (35) s'étend sur le véhicule tout entier.

4. Véhicule moteur, selon l'une des précédentes revendications de 1 à 3, **caractérisé par le fait qu'**il possède un châssis présenté sous la forme de préférence bombée d'un wagon plat (39) qui sert à recevoir tous les agrégats et les installations prévues pour le transport et que le wagon plat est doté d'un véhicule moteur qui possède au moins un bogie entraînable, de préférence un bogie Jacobs (38).

5. Véhicule moteur, selon l'une des précédentes revendications de 1 à 4, **caractérisé par le fait que** l'unité motrice (37) est une machine à combustion interne, notamment un moteur diesel, qui est prévue dans le châssis (34) au niveau le plus bas autorisé.

6. Véhicule moteur, selon l'une des précédentes revendications de 1 à 4, **caractérisé par le fait que** l'unité motrice (37) est un moteur électrique pour lequel la source d'énergie est prévue sous forme de batteries ou d'accumulateurs ou d'une source d'énergie externe, comme par exemple celle d'un caténaire.

7. Véhicule moteur, selon la revendication 6, **caractérisé par le fait que** l'unité motrice (37) est composée de moteurs électriques individuels pour chaque roue.

8. Véhicule moteur, selon l'une des revendications de 1 à 4, **caractérisé par le fait que** l'unité motrice (37) est un moteur hybride.

9. Véhicule moteur, selon l'une des revendications de 1 à 8, **caractérisé par le fait que** sont prévus une alimentation en énergie et/ou des unités de commande et/ou des freins et/ou un éclairage dans ou sur le véhicule moteur (31).

10. Véhicule moteur, selon l'une des revendications de 1 à 9, **caractérisé par le fait qu'**il est prévu au début et/ou à la fin du train un système de capteurs qui puisse transmettre ces valeurs mesurées ou ces impulsions au véhicule moteur (31), de préférence par télémesure.

11. Véhicule moteur, selon l'une des revendications de 1 à 10, **caractérisé par le fait que** le véhicule moteur (37), via une installation hydraulique par exemple qui est prévue de préférence dans le châssis (34), est soulevable et abaissable verticalement.

12. Véhicule moteur, selon l'une des revendications de 1 à 11, **caractérisé par le fait que** la passerelle (35) via une installation hydraulique par exemple est soulevable ou abaissable verticalement.

13. Véhicule moteur, selon l'une des revendications de 1 à 12, **caractérisé par le fait que** la passerelle (35) se présente en plusieurs parties et que les différentes parties de la passerelle (35) sont selon le besoin soulevables et abaissables verticalement.

14. Véhicule moteur, selon l'une des revendications de 1 à 13, **caractérisé par le fait qu'**une rampe mobile est prévue au moins à l'une des extrémités du train.
